**Europäisches Patentamt**

**European Patent Office**

**Office européen des brevets**

(19)

(11) Publication number: **0 016 618**

**A1**

(12) **EUROPEAN PATENT APPLICATION**

(21) Application number: **80300785.5**

(22) Date of filing: **14.03.80**

(51) Int. Cl.³: **F 16 B 12/46**
**A 47 B 88/00**

(30) Priority: **17.03.79 GB 7909447**

(43) Date of publication of application:
**01.10.80 Bulletin 80/20**

(84) Designated Contracting States:
**DE FR NL SE**

(71) Applicant: **L.B. (Plastics) Limited**
**Firs Works Nether Heage**
**Belper, Derbyshire(GB)**

(72) Inventor: **King, Peter Gregory**
**The Winds**
**Caldy Cheshire(GB)**

(74) Representative: **MacMaster, Alan Jeffrey et al,**
**Swindell & Pearson 44 Friar Gate**
**Derby(GB)**

(54) **Furniture drawers.**

(57) A device for interconnecting drawer wall panels comprises two hingedly interconnected parts 50, 51 connectible to adjacent drawer wall panels 20, and catch means 72, 73, 76 for retaining the parts in positions at right angles to one another. The catch means comprises external end caps 72 carried by one of the parts at each end of a hollow corner post which is formed when the parts are assembled, the end caps 72 having inturned lips 73 resiliently engageable with complementary retaining members 76 on the other part of the device.

EP 0 016 618 A1

./...

_FIG.1_

- 1 -

## Furniture Drawers

This invention relates to furniture drawers and to components for use in constructing drawers.

Proposals have been made for drawers consisting of wall panels hinged together so that they can be packaged and sold in a generally flat condition and then assembled to form the drawer, catch means being provided to latch the parts in their assembled positions at 90° to one another.

Hitherto such catch means have been provided internally of corner piece parts which are located at the hinged regions, the catch means then being hidden. However such arrangements suffer from a number of disadvantages. The moulds required in order to make the catch means are complex, and scrap material trimming can be difficult and time consuming. Also, the size of the catch means is limited which makes it difficult to achieve reliable latching action, and the catches are susceptible to breakage. It is an object of the present invention to obviate or mitigate some or all of these disadvantages.

The invention provides a device for interconnecting drawer wall panels, the device comprising two hingedly interconnected parts respectively connectible to adjacent drawer wall panels, and catch means for retaining said parts in positions at right angles to one another, the catch means comprising at least one external end cap carried by one of said parts and resiliently engageable with a complementary retaining member on the other part. Preferably similar catch means are provided at the upper and lower ends of the associated part.

Preferably said parts co-operate to form a hollow corner post which is of rectangular shape in plan and remains exposed after assembly of the wall panels, said end cap forming an end closure for said post in the assembled condition.

Preferably also the or each said end cap is formed with a downturned lip at its free end adapted for locking engagement with the associated retaining member. The outer surface of said lip may be curved to conform to the curvature of the edges of the wall panels in appropriate cases.

An embodiment of the invention will now be described, by way of example only, with reference to the accompanying drawings, in which:-

Fig. 1 is an exploded perspective view of part of a drawer system using folding corner pieces embodying the invention;prior to assembly;

Fig. 2 is a perspective view of a corner piece used in Fig. 1 in its assembled condition; and

Figs. 3, 4 and 5 are front, top and back views respectively of the corner piece of Fig. 2 opened out.

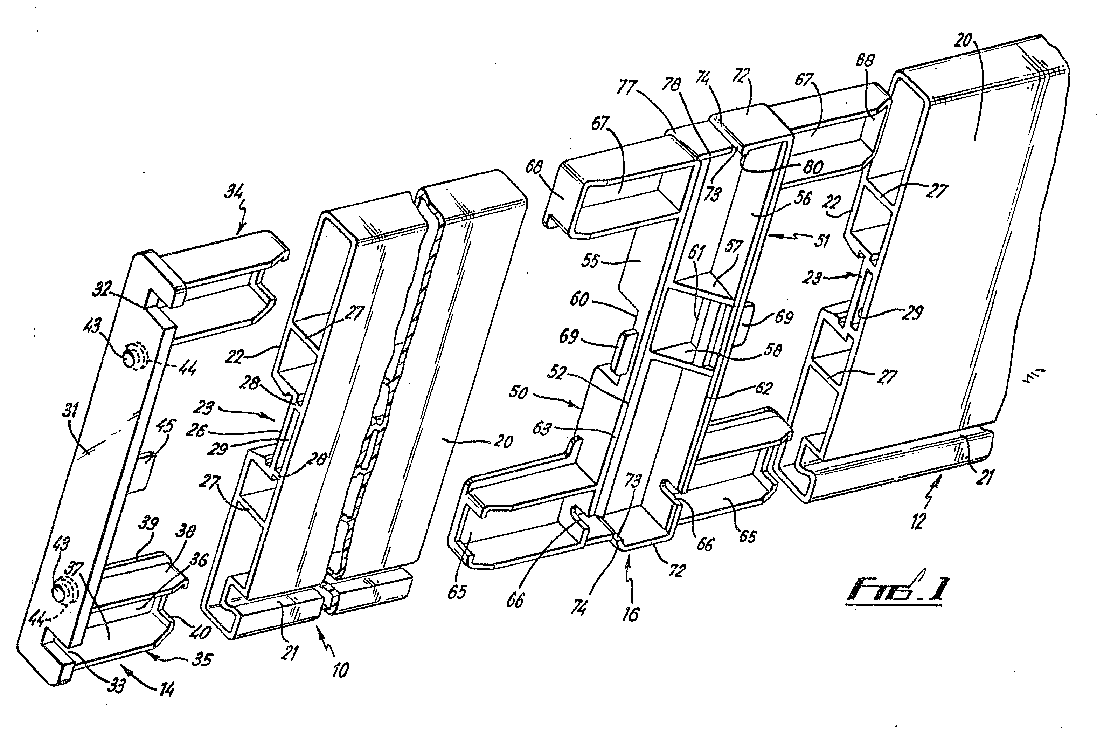

Referring to Fig. 1, there are shown two sections 10, 12 of drawer wall panel formed from extruded plastics material, the former to represent a drawer side (much shortened for illustration only) and the latter to represent a drawer back. The drawer side 10 is engageable with a front connector 14 at its forward end for attachment to a drawer front, and a folding corner piece 16 is engageable with the rear end of the panel 10 for connection with the drawer back panel 12.

The panels 10, 12 are each provided on their inner surfaces 20 with longitudinal recesses 21 near their lower edges to receive the edges of a drawer bottom, and the outer surface 22 of each panel is centrally recessed at 23 to receive a runner or a slide mechanism by means of which the drawer is slidably supported in a cabinet or the like. Extending between the faces 20, 22 of the panels are webs 27 displaced from the recesses 23, and webs 28 near each end of the base 26 of the recess. Between the webs 28 is a narrow cavity 29.

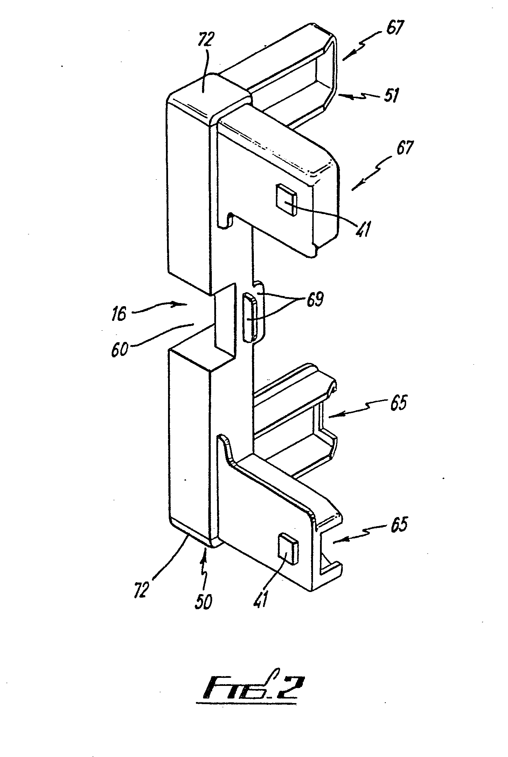

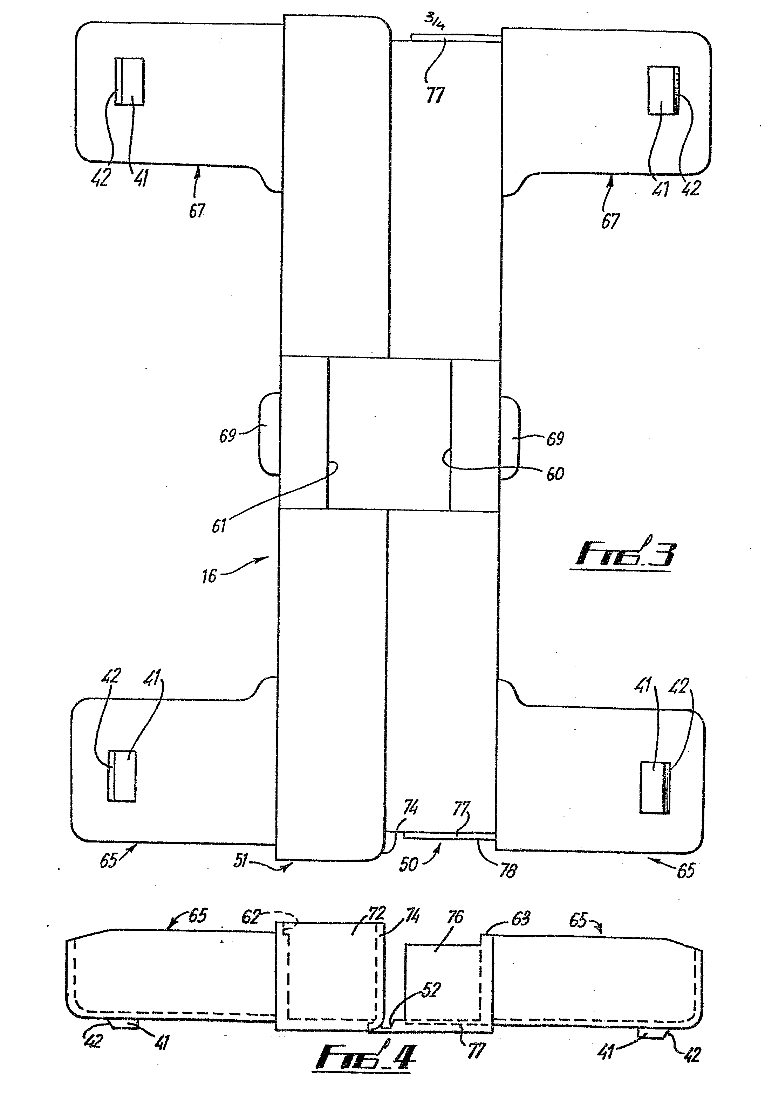

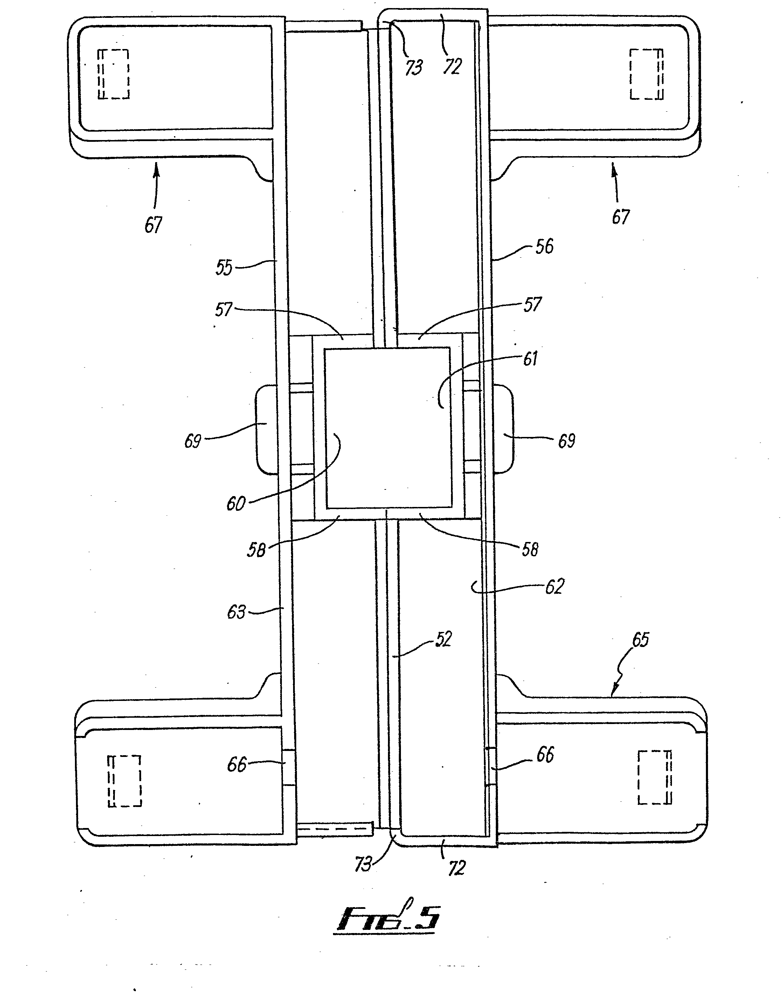

The front connector 14 has a front plate 31 notched at 32 and 33 to register with the drawer bottom recess 21 regardless of which side wall it closes. The front plate 31 carries spigot-like extensions 34, 35 near its ends which are of open box form. The base web 36 of each extension is inset from the adjacent edge of the plate 31 by substantially the thickness of the external wall 22 of the drawer panel, and extends (at 39) beyond the side webs 38. The free-end of each extension 34, 35 is broken away at 40 to accommodate the drawer bottom recess 21. The base 36 of each extension 34, 35 has a small exterior stud or projection 41 with a chamfered forward edge 42 (Figs. 3 and 4) to ease its passage into the drawer extrusion before engagement thereof in a matching hole or recess (not visible) in the exterior wall 22 of the extrusion. The ends of the side walls 37, 38 of the extensions 34, 35 are chamfered to ease entry into the extrusion. The front plate 31 has holes 43 through interior bosses 44 to aid fixing to a drawer front using self-tapping screws or threaded studs and nuts. An inwardly directed flat tongue 45 is adapted to engage in the cavity 29 of the extrusion behind the runner recess 23.

The folding corner piece 16 (see also Figs. 3 to 5) has two parts or leaves 50, 51 hinged one to the other by a thinning of the plastics material between the two parts by means of a V-notch 52. The two parts together constitute a corner post and are each of generally angle section having spaced upstanding walls 55, 56 braced by right-triangular bracing webs 57, 58 flanking recesses 60, 61 which register with the runner recesses 23 in the wall panels. The webs 57, 58 abut in the assembled position of the corner piece in which the hinged parts 50 and 51 are disposed at 90° to one another. The free edge of the upstanding wall 56 of the part 50 is stepped at 62 to receive the free edge of the upstanding wall 55 of the part 50 and thus produce a strong box-like structure or corner post on folding of the hinge leaves together with the edges 62, 63 and bracing webs 57, 58 in abutment.

The upstanding walls 55, 56 each carry upper and lower spigot-like projections, the lower projections 65 being identical to the projections 34, 35 of the drawer front connector 14 and having associated slots 66 to accommodate the drawer bottom, and the upper projections 67 also being identical save for a full end closure wall 68. Also shown are tongues 69 similar to the tongues 45 of the front connector.

Resilient end caps 72 project from the upper and lower ends of the upstanding wall 56 of the leaf or part 51 and extend towards the other leaf 50. The end caps 72 have in-turned lips 73 affording a radiussed outer surface 74 to match the radiussed corners of the wall panels. Locking projections or ears 76 project from the wall 55 of the other leaf 50 and are inset relative to the end caps 72 so as to fit thereunder when the leaves 50 and 51 are moved to their assembled position. During such movement the end caps 72 are flexed outwards as the lips 73 slide over the locking ears 76 and then spring inwards to latch over the edges 77 of the ears. The ears 76 are inset at 78 from the free edge of the wall 55 to provide a further abutment against the side edges of the end caps 72 in the folded condition. These side edges may thus be of greater thickness than the matching parts of the wall panels.

In the arrangement described the end caps 72 are each attached at one edge to the wall 53 of the leaf 51 but they may be free of the wall 53 to facilitate flexing if desired. However this is not essential so long as the material used is of sufficient flexibility. In some cases the ears 76 may have tapered or otherwise inclined outer surfaces to assist engagement so that the extent of resilient deformation of the end caps 72 reduces from its free corner 80 inwards towards the wall 53.

The arrangement described provides a simple and effective means of locking the hinged parts of the connector together and hence retaining the walls of the drawer at right angles to one another. The assembled connector is of neat appearance and requires less complex and expensive tooling than previously proposed arrangements.

Various modifications may be made without departing from the invention. For example the construction of the wall panels and of the front and corner connector may be altered substantially and the invention could be applied to drawer constructions utilizing solid wall panels having openings in their ends to receive spigots, dowels or other suitable projections on the connectors. Any suitable number and arrangement of such projections may be provided and if desired the external end-cap locking arrangement may be supplemented by locking means arranged internally of the corner connectors.

PATENT CLAIMS

1.    A device for interconnecting drawer wall panels, characterised in that the device comprises two hingedly interconnected parts (50, 51) respectively connectible to adjacent drawer wall panels (20), and catch means (72, 73, 76) for retaining said parts in positions at right angles to one another, the catch means comprising at least one external end cap(72)carried by one of said parts (51) and resiliently engageable with a complementary retaining member (76) on the other part.

2.    A device according to claim 1 characterised in that said parts (50, 51) co-operate to form a hollow corner post (16) which is of rectangular shape in plan and remains exposed after assembly of the wall panels (20), said end cap (72) forming an end closure for said post (16) in the assembled condition.

3.    A device according to claim 1 or 2 characterised in that similar catch means (72, 73, 76) are provided at the upper and lower ends of the associated part (50, 51).

4.    A device according to claim 2 or 3 characterised in that the or each said end cap (72) is formed with a downturned lip (73) at its free end adapted for locking engagement with the associated retaining member (76).

5.    A device according to claim 4 characterised in that the edges of said wall panels (20) are curved and the outer surface (74) of said lip (73) is curved to conform to the curvature of the wall panels.

6.    A device according to claim 4 or 5 characterised in that the or each said retaining means comprises a lug or ear (76) adapted for locking engagement with said lip (73) on the associated end cap (72).

7. A device according to any preceding claim characterised in that it includes additional internal catch means.

8. A device according to any preceding claim characterised in that mating edges (62, 63) of said parts (50, 51) are recessed for interfitting engagement to rigidify the corner post (16) in the assembled condition.

9. A device according to any preceding claim characterised in that each of said parts (50, 51) incorporates at least two projecting spigots (65,67) adapted for engagement in openings in the ends of associated wall panels (20) to connect same to the respective parts of the device.

10. A device according to claim 9 characterised in that said spigots (65, 67) are provided with projecting detents (41) engageable in holes formed in the associated wall panel (20) to retain the panels against disengagement.

11. A device according to any preceding claim characterised in that it is formed as a one-piece moulding from plastics material, said hinge comprising a web (52) of plastics material of relatively thin cross-section.

12. An assembly consisting of at least three drawer wall panels characterised in that the wall panels are interconnected by devices according to any preceding claim.

Fig. 1

FIG.2

*Fig. 3*

*Fig. 4*

_Fig.5_

| | European Patent Office | **EUROPEAN SEARCH REPORT** | Application number<br>EP 80 30 0785 |
|---|---|---|---|

| **DOCUMENTS CONSIDERED TO BE RELEVANT** | | | CLASSIFICATION OF THE APPLICATION (Int. Cl. 3) |
|---|---|---|---|
| Category | Citation of document with indication, where appropriate, of relevant passages | Relevant to claim | |
| X | <u>FR - A - 2 273 183</u> (DUPREE)<br>   * Claims 1-5; figures 1-3 *<br>& GB - A - 1 502 970<br><br>-- <br><br><u>FR - A - 2 358 129</u> (PLASTICS)<br>   * Page 12, lines 3-5; figure 4D *<br><br>---- | 1-3,6-9,11,12<br><br><br><br>9 | F 16 B 12/46<br>A 47 B 88/00 |

| TECHNICAL FIELDS SEARCHED (Int.Cl. 3) |
|---|
| A 47 B<br>F 16 B |

| CATEGORY OF CITED DOCUMENTS |
|---|
| X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | The present search report has been drawn up for all claims | |
|---|---|---|
| Place of search<br>The Hague | Date of completion of the search<br>26-06-1980 | Examiner<br>SCHMITTER |

EPO Form 1503.1   06.78